# EUROPÄISCHE PATENTANMELDUNG

(11) **EP 3 326 771 A1**
(43) Veröffentlichungstag der Anmeldung: **30.05.2018**
(21) Anmeldenummer: 17203353.2
(22) Anmeldetag: 23.11.2017
(51) Int. Cl.: B29C 33/36, B29C 33/00, B29C 33/44, B29C 39/02, B29C 39/06, B29C 39/00, F21V 3/06, B29D 11/00

(54) **HERSTELLEN EINES LICHTDURCHTRITTSKÖRPERS FÜR EINE LEUCHTE**

(30) Priorität: 28.11.2016 DE 102016223516
(71) Anmelder: OSRAM GmbH, 80807 München (DE)
(72) Erfinder: Reiss, Martin, 93161 Sinzing (DE)

(57) **Zusammenfassung**

Die Erfindung betrifft ein Verfahren zum Herstellen eines Lichtdurchtrittskörpers (10, 12, 14, 16, 18, 20, 22) für eine Leuchte, mit den Schritten:
- Bereitstellen von flüssigem, aushärtbarem Silikonharz,
- Bereitstellen wenigstens einer Gussform (26),
- Einbringen einer vorgegebenen Menge des flüssigen, aushärtbaren Silikonharzes in die Gussform (26),
- Aushärten des flüssigen, aushärtbaren Silikonharzes in der Gussform (26), wodurch der Lichtdurchtrittskörper (10, 12, 14, 16, 18, 20, 22) ausgebildet wird, und
- Entformen des Lichtdurchtrittskörpers (10, 12, 14, 16, 18, 20, 22) aus der Gussform (26).

## Beschreibung

Die Erfindung betrifft ein Verfahren zum Herstellen eines Lichtdurchtrittskörpers für eine Leuchte, eine Vorrichtung hierfür sowie einen Lichtdurchtrittskörper für eine Leuchte, mit einer Lichteintrittsfläche und einer Lichtaustrittsfläche, die an wenigstens einer Oberfläche des Lichtdurchtrittskörpers ausgebildet sind.

Leuchten beziehungsweise Leuchteinrichtungen der gattungsgemäßen Art sind im Stand der Technik umfänglich bekannt, sodass es eines gesonderten druckschriftlichen Nachweises hierfür nicht bedarf. Sie umfassen üblicherweise ein Gehäuse, welches ein Leuchtmittel aufnimmt beziehungsweise hält, um es in vorgebbarer Weise bezüglich einer Lichtabgabe positionieren zu können. In der Regel handelt es sich bei dem Leuchtmittel um ein Leuchtmittel, welches zum Zwecke der Lichtabgabe mit elektrischer Energie beaufschlagt wird. Zu diesem Zweck umfasst die Leuchte in der Regel auch einen elektrischen Anschluss sowie gegebenenfalls ein Vorschaltgerät, um extern, beispielsweise von einem öffentlichen Energieversorgungsnetz oder dergleichen, zugeführte elektrische Energie in für das Leuchtmittel geeignete Weise umzuformen. Darüber hinaus kann auch eine Steuerfunktion vorgesehen sein, die es erlaubt, das Leuchtmittel im Sinne einer gewünschten Lichtabgabe, zum Beispiel hinsichtlich einer Helligkeit, einer Farbe und/oder dergleichen, steuern zu können, beispielsweise mittels eines externen Steuergerätes und/oder dergleichen. Die vorgenannten Einheiten sind in der Regel von dem Gehäuse umfasst. Das Gehäuse stellt somit nicht nur eine Halte- beziehungsweise Befestigungsmöglichkeit bereit, sondern es kann darüber hinaus auch eine Schutzfunktion gegenüber äußeren Einwirkungen sowie auch die Bereitstellung einer vorschriftsmäßigen elektrischen Energieversorgung für das Leuchtmittel ermöglichen.

Das Leuchtmittel kann beispielsweise wenigstens eine Glühlampe, wenigstens eine Gasentladungslampe, insbesondere aber auch wenigstens ein halbleiterbasiertes Leuchtmittel wie eine Leuchtdiode, ein Laserscanner und/oder dergleichen umfassen.

Die Leuchte umfasst üblicherweise eine Lichtaustrittsöffnung, die, wenn ein Gehäuse vorhanden ist, häufig durch das Gehäuse bereitgestellt ist. Durch die Lichtaustrittsöffnung wird das von dem Leuchtmittel abgegebene Licht im bestimmungsgemäßen Betrieb von der Leuchte abgegeben.

Für die unterschiedlichsten Funktionen kann vorgesehen sein, dass zwischen dem Leuchtmittel und der Lichtaustrittsöffnung beziehungsweise in der Lichtaustrittsöffnung ein Lichtdurchtrittskörper angeordnet ist. Der Lichtdurchtrittskörper ist vorzugsweise für vom Leuchtmittel emittiertes Licht transparent und/oder transluzent. Insbesondere ist er ein Festkörper, der beispielsweise starr aber auch mit einer vorgegebenen Elastizität ausgebildet sein kann. Mit dem Lichtdurchtrittskörper kann zum Beispiel das durch das Leuchtmittel emittierte Licht für die Lichtabgabe durch die Leuchte in vorgegebener Weise beeinflusst werden. Zu diesem Zweck sind insbesondere die Lichteintrittsfläche und die Lichtaustrittsfläche vorgesehen, die sich gegebenenfalls auch zumindest teilweise überlappen können. Vorzugsweise tritt das vom Leuchtmittel emittierte Licht durch die Lichteintrittsfläche in den Lichtdurchtrittskörper ein, durchdringt den Lichtdurchtrittskörper und tritt durch die Lichtaustrittsfläche wieder aus dem Lichtdurchtrittskörper aus. Dabei kann vorgesehen sein, dass das Licht seine Eigenschaften, wie zum Beispiel seine Farbe, seine Richtung, seine Intensität und/oder dergleichen, beim Passieren des Lichtdurchtrittskörpers verändert. Der Lichtdurchtrittskörper kann alternativ oder ergänzend auch dazu vorgesehen sein, die Lichtaustrittsöffnung nach außen zu verschließen, sodass, vorzugsweise in Zusammenwirkung mit dem Gehäuse, die Leuchte vor mechanischen, physikalischen oder sonstigen äußeren Einwirkungen geschützt ausgebildet werden kann. Der Lichtdurchtrittskörper kann alternativ oder ergänzend weiterhin auch optisch aktive Eigenschaften aufweisen, die die Lichtabgabe durch die Leuchte beeinflussen können. Insofern kann der Lichtdurchtrittskörper ein optisch aktives Element sein, beispielsweise nach Art einer Linse, eines Prismas, aber auch eines Spiegels und/oder dergleichen.

Als Werkstoff für den Lichtdurchtrittskörper wird im Stand der Technik üblicherweise ein thermoplastischer Kunststoff genutzt, beispielsweise Polykarbonat, Polyethylenterephthalat oder dergleichen. Gattungsgemäße Lichtdurchtrittskörper werden häufig als Platte mit zwei großen, parallelen Oberflächen mittels eines Spritzgussverfahrens hergestellt. Darüber hinaus können Lichtdurchtrittskörper auch aus Glas nach Art einer Glasplatte gebildet sein, wobei eine entsprechende Oberflächenbehandlung erforderlich ist, beispielsweise Ätzen, Sandstrahlen und/oder dergleichen.

Obwohl sich Lichtdurchtrittskörper der gattungsgemäßen Art bewährt haben, zeigen sich zum Beispiel bei Lichtdurchtrittskörpern aus thermoplastischen Kunststoffen Nachteile. So zeigt sich, dass aufgrund der Lichtbeaufschlagung und gegebenenfalls auch einer Temperaturbeaufschlagung gewöhnliche geeignete thermoplastische Werkstoffe einer nicht unerheblichen Alterung unterliegen und somit im bestimmungsgemäßen Betrieb unerwünschte Veränderungen vollziehen, die die bestimmungsgemäße Funktion des Lichtdurchtrittskörpers mit der Zeit immer mehr beeinträchtigen können. Mit Glasplatten können diese Probleme zwar vermieden werden, jedoch sind sie aufwendig herzustellen und benötigen die vorgenannte aufwendige Oberflächenbearbeitung in konstanter Qualität. Darüber hinaus weisen Glasplatten natürlich gegenüber thermoplastischen Kunststoffplatten ein deutlich größeres Gewicht auf und können bei ungünstigen mechanischen Einwirkungen einen Glasbruch nach sich ziehen, bei dem gefährliche Splitter freigesetzt werden können. Lichtdurchtrittskörper aus Glas eigenen sich aus diesem Grund bereits nicht für eine Herstellung in großen Stückzahlen.

Bezüglich thermoplastischer Kunststoffe ist ergänzend anzumerken, dass die in Frage kommenden Kunststoffe vergleichsweise teuer in ihrer Beschaffung und Handhabung sind, weil bezüglich Leuchten eine Vielzahl von spezifischen Anforderungen zu beachten sind, die teilweise auch durch die Normung erfasst sind, beispielsweise bezüglich einer mechanischen Belastbarkeit, einer elektrischen Sicherheit und/oder dergleichen. Nicht jeder thermoplastische Kunststoff ist deshalb für den bestimmungsgemäßen Einsatz geeignet, weshalb nur ausgewählte thermoplastische Kunststoffe für die Ausbildung von Lichtdurchtrittskörpern für die Leuchte in Betracht kommen.

Ist der Lichtdurchtrittskörper ferner ein Bestandteil des Gehäuses, beispielsweise weil er die Lichtaustrittsöffnung verschließt oder lediglich in ihr angeordnet ist, können darüber hinaus auch Sicherheitsvorschriften relevant sein, die zumindest teilweise durch die Normung erfasst sind, beispielsweise der Springhammer-Test, der Impakt-Test oder dergleichen. Weitere Anforderungen können sich in Bezug auf einen mechanischen Schutz, einen Schutz vor Entflammbarkeit und/oder dergleichen ergeben.

Der Erfindung liegt die Aufgabe zugrunde, die Herstellung eines Lichtdurchtrittskörpers zu verbessern.

Als Lösung für die Aufgabe schlägt die Erfindung ein Verfahren zum Herstellen eines Lichtdurchtrittskörpers für eine Leuchte, eine Vorrichtung zum Herstellen eines Lichtdurchtrittskörpers für eine Leuchte sowie ein Lichtdurchtrittskörper gemäß den unabhängigen Ansprüchen vor.

Vorteilhafte Weiterbildungen der Erfindung ergeben sich anhand von Merkmalen der abhängigen Ansprüche.

Verfahrensseitig wird insbesondere vorgeschlagen, dass das Verfahren die folgenden Schritte aufweist:
- Bereitstellen von flüssigem, aushärtbarem Silikonharz,
- Bereitstellen wenigstens einer Gussform,
- Einbringen einer vorgegebenen Menge des flüssigen, aushärtbaren Silikonharzes in die Gussform,
- Aushärten des flüssigen, aushärtbaren Silikonharzes in der Gussform, wodurch der Lichtdurchtrittskörper ausgebildet wird, und
- Entformen des Lichtdurchtrittskörpers aus der Gussform.

Vorrichtungsseitig wird insbesondere vorgeschlagen, dass die Vorrichtung aufweist:
- wenigstens eine Gussform,
- wenigstens einen Ausgeber zum Einbringen einer vorgegebenen Menge von flüssigem, aushärtbarem Silikonharz in die Gussform,
- eine Aushärteeinheit zum Aushärten des flüssigen, aushärtbaren Silikonharzes in der Gussform, um den Lichtdurchtrittskörper auszubilden, und
- eine Entformeinheit zum Entformen des
Lichtdurchtrittskörpers.

Bezüglich eines gattungsgemäßen Lichtdurchtrittskörpers wird vorgeschlagen, dass der Lichtdurchtrittskörper ausschließlich aus einem aushärtbaren Silikonharz gebildet ist, das höchstens einen oder mehrere Zusatzstoffe ausschließlich zum Einstellen einer vorgegebenen optischen Eigenschaft des Lichtdurchtrittskörpers enthält.

Die Erfindung basiert auf der Erkenntnis, dass sich als Werkstoff für den Lichtdurchtrittskörper Silikon besonders eignet. Dadurch wird es möglich, besondere Eigenschaften des Silikons zu nutzen, um grundsätzlich eine Umstellung des Herstellungsverfahrens für den Lichtdurchtrittskörper für die Leuchte vorzunehmen. Im Gegensatz zu den üblichen geeigneten thermoplastischen Kunststoffen kann das Silikonharz nämlich auf einfache Weise mittels eines Gießprozesses genutzt werden, um die Lichtdurchtrittskörper herstellen zu können. Die ansonsten geeigneten thermoplastischen Werkstoffe eignen sich dagegen im Wesentlichen lediglich für das Spritzgussverfahren. Dadurch, dass durch Nutzen von Silikon als Werkstoff für den Lichtdurchtrittskörper ein Gießverfahren eingesetzt werden kann, kann die Herstellung des Lichtdurchtrittskörpers erheblich vereinfacht werden. Es ist nunmehr nämlich möglich, im Wesentlichen durch einen einfachen Gießschritt mit anschließendem Aushärten den Lichtdurchtrittskörper herzustellen. Dieses Verfahren eignet sich deshalb auch besonders gut für eine Massenproduktion, wodurch auf einfache Weise ein sehr günstiger Herstellprozess erreicht werden kann. Darüber hinaus brauchen durch die Nutzung des Gießverfahrens keine unerwünschten Zusatzstoffe beziehungsweise Additive genutzt zu werden, die optische Eigenschaften des hierdurch hergestellten Lichtdurchtrittskörpers nachteilig beeinflussen können, wie es bei anderen Herstellverfahren, insbesondere bei Extrusionsverfahren oder auch Spritzgußverfahren zwingend erforderlich ist. Zusatzstoffe brauchen bei der Erfindung gegebenenfalls also ausschließlich nur zum Einstellen vorgegebener optischer Eigenschaften des Lichtdurchtrittskörpers genutzt zu werden.

Darüber hinaus hat sich gezeigt, dass sich Silikonharz besonders gut für den bestimmungsgemäßen Einsatz eignet, weil Silikon eine erheblich bessere Beständigkeit gegenüber Lichtstrahlung und thermischer Beanspruchung als thermoplastische Kunststoffe aufweist.

Gegenüber Glas als Werkstoff für den Lichtdurchtrittskörper kann mit dem Einsatz von Silikon eine entsprechende Lichtdurchtrittsfunktion mit gegebenenfalls vorgegebenen Eigenschaften nicht nur an der Oberfläche des Lichtdurchtrittskörpers erreicht werden, sondern aufgrund des günstigen Gießprozesses kann eine entsprechende vorgegebene Eigenschaft auch innerhalb des Lichtdurchtrittskörpers realisiert werden. Mit der Erfindung ist es also möglich, einen zuverlässigen und kostengünstigen Lichtdurchtrittskörper bereitzustellen.

Dabei erlaubt es die Erfindung, durch Gestaltung von äußeren Abmessungen des Lichtdurchtrittskörpers eine Vielzahl von gewünschten Konstruktionen realisieren zu können. So kann der Lichtdurchtrittskörper vorzugsweise als Platte mit zwei im Wesentlichen parallelen großen Oberflächen ausgebildet sein. Die Platte kann beispielsweise rund, insbesondere kreisrund, oval oder dergleichen oder auch eckig, beispielsweise als Dreieck, als Viereck oder als n-Eck, sowie auch in Kombinationen hiervon, insbesondere nach Art einer Scheibe, hergestellt werden. Die Abmessungen in den Ebenen der großen Oberflächen können nahezu beliebig gewählt werden, je nach Bedarf für die Leuchte, in der der jeweilige Lichtdurchtrittskörper eingesetzt werden soll.

Der Lichtdurchtrittskörper, insbesondere wenn er als Silikonplatte oder -scheibe ausgebildet ist, kann beispielsweise als Diffusorelement oder dergleichen ausgebildet sein. Zu diesem Zweck kann vorgesehen sein, dass der Lichtdurchtrittskörper beziehungsweise die Silikonplatte in ihrem Volumen diffusive Partikel enthält, die eine vorgegebene Diffusionswirkung in Bezug auf durchtretendes Licht zur Folge haben. Mit dem erfindungsgemäßen Herstellungsverfahren ist eine solche Silikonplatte einfach herstellbar, weil beispielsweise im flüssigen, aushärtbaren Silikonharz entsprechende Partikel eingebracht sein können. Darüber hinaus kann natürlich auch vorgesehen sein, dass die diffusiven Partikel zumindest teilweise in einer Beschichtung angeordnet sein können, die beispielsweise auf einer oder beider der großen Oberflächen der Silikonplatte angeordnet ist. Dies gilt natürlich entsprechend auch für den Fall, dass allgemein ein Lichtdurchtrittskörper bereitgestellt wird.

Darüber hinaus kann vorgesehen sein, dass der Lichtdurchtrittskörper, insbesondere die Silikonplatte, phosphoreszierende und/oder fluoreszierende Partikel aufweist. Dadurch können besondere Effekte in Bezug auf durchtretendes Licht erreicht werden. Beispielsweise kann eine Lichtfarbe beziehungsweise eine Lichttemperatur in gewünschter Weise beeinflusst werden. Schließlich besteht auch die Möglichkeit, dass Farbpigmentpartikel im Silikonharz vorgesehen werden, beispielsweise um eine Farbe des Lichtdurchtrittskörpers beziehungsweise der Silikonplatte einstellen zu können.

Mit der Erfindung ist es möglich, Lichtdurchtrittskörper mit unterschiedlichsten Abmessungen auszubilden. Für eine Silikonplatte kann beispielsweise vorgesehen sein, dass diese eine Dicke von etwa 0,5mm bis etwa 5mm aufweist. Eine Abmessung in Richtung einer der großen Oberflächen kann beispielsweise von etwa 5mm bis etwa 0,5m betragen. Ist die Silikonplatte beispielsweise als rechteckförmige Platte ausgebildet, können die vorgenannten Abmessungen sowohl hinsichtlich der Breite als auch hinsichtlich der Länge vorgesehen sein.

Durch Anpassen der vorgegebenen Menge des flüssigen, aushärtbaren Silikonharzes können mit ein und derselben Gussform eine Vielzahl unterschiedlicher Lichtdurchtrittskörper realisiert werden. Darüber hinaus besteht natürlich die Möglichkeit, die Form der Lichtdurchtrittskörper auch durch eine Bewegung der Gussform während des Aushärtens zu beeinflussen. Beispielsweise kann vorgesehen sein, dass die Gussform rotiert wird, um eine vorgegebene Form des Lichtdurchtrittskörpers erreichen zu können. Auch eine Schrägstellung der Gussform oder dergleichen beim Aushärten kann vorgesehen sein.

Vorrichtungsseitig kann das flüssige, aushärtbare Silikonharz mittels einer Bereitstellungseinheit bereitgestellt werden. Die Bereitstellungseinheit kann beispielsweise ein Tiegel sein, in dem das flüssige, aushärtbare Silikonharz in vorgebbarer Weise für die erfindungsgemäße Verfahrensführung bereitgehalten wird. Zu diesem Zweck kann vorgesehen sein, dass das flüssige, aushärtbare Silikonharz gegenüber einer äußeren Atmosphäre abgeschirmt angeordnet ist. Weiterhin kann vorgesehen sein, dass das flüssige, aushärtbare Silikonharz auf vorgegebene physikalische Parameter gehalten wird, beispielsweise einen vorgegeben Druck, eine vorgegebene Temperatur und/oder dergleichen, sodass sie für eine zuverlässige Verfahrensführung bereitgestellt werden kann.

Die wenigstens eine Gussform ist vorzugsweise für ein Gießverfahren unter Nutzung von flüssigem, aushärtbarem Silikonharzen geeignet. Zu diesem Zweck kann die Gussform aus einem geeigneten Werkstoff gebildet sein, beispielsweise einem Kunststoff, einem Verbundwerkstoff, Metall und/oder dergleichen. Die Gussform ist so ausgestaltet, dass sie einen Lichtdurchtrittskörper mit vorgegebenen Abmessungen und Eigenschaften herzustellen ermöglicht.

Ferner umfasst die Vorrichtung wenigstens einen Ausgeber zum Einbringen einer vorgegebenen Menge des flüssigen, aushärtbaren Silikonharzes in die Gussform. Der Ausgeber, gelegentlich auch Dispenser genannt, dient dazu, das flüssige, aushärtbare Silikonharz in vorgegebener Weise in die Gussform zu einzubringen, sodass zugleich die vorgegebene Menge des flüssigen, aushärtbaren Silikonharzes in die Gussform gelangt. Der Ausgeber dient vorzugsweise also auch dazu, eine entsprechende Dosierung vorzusehen. Zu diesem Zweck kann eine entsprechende Steuerung des Ausgebers vorgesehen sein, wobei die Steuerung einen Sensor umfassen kann, mittels dem eine aktuell in die Gussform eingebrachte Menge an flüssigem, aushärtbarem Silikonharz erfasst werden kann. Dadurch kann eine genaue Einstellung der vorgegebenen Menge erreicht werden, sodass am Ende des Verfahrens gemäß der Erfindung der gewünschte Lichtdurchtrittskörper mit hoher Genauigkeit bereitgestellt werden kann.

Die Aushärteeinheit dient zum Aushärten des flüssigen, aushärtbaren Silikonharzes in der Gussform, wobei der Lichtdurchtrittskörper ausgebildet wird. Das Aushärten kann beispielsweise durch Aufbewahren des flüssigen, aushärtbaren Silikonharzes in der Gussform für einen vorgegebenen Zeitraum erfolgen. Darüber hinaus können auch weitere physikalische Einwirkungen erfolgen, beispielsweise eine Applikation von Temperatur, um den Vorgang des Aushärtens unter vorgegebenen Bedingungen in einem möglichst geringen Zeitraum zu ermöglichen. So kann beispielsweise vorgesehen sein, dass für das Aushärten das Anordnen der Gussform in einem Ofen vorgesehen wird, bei dem das flüssige, aushärtbare Silikonharz einer Temperatur in einem Bereich von etwa 100°C bis etwa 200°C ausgesetzt wird. Die Temperatur kann während des Aushärtens konstant gehalten werden. Darüber hinaus kann aber auch vorgesehen sein, dass die Temperatur während des Vorgangs des Aushärtens verändert wird, beispielsweise indem die Temperatur während des Aushärtens gemäß einem Temperaturprofil angepasst wird.

Darüber hinaus erfolgt nach dem Aushärten ein Entformen des durch das Aushärten gebildeten Lichtdurchtrittskörpers aus der Gussform. Das Entformen kann beispielsweise dadurch erfolgen, dass mittels eines Entformwerkzeugs der Lichtdurchtrittskörper aus der Gussform entnommen wird. Weiterhin kann vorgesehen sein, dass das Entformen durch Einnehmen einer Entformposition ermöglicht wird. Beispielsweise kann hierzu vorgesehen sein, dass die Gussform in eine Entformposition geschwenkt wird, in der der Lichtdurchtrittskörper, beispielsweise aufgrund einer Schwerkraftwirkung, aus der Gussform herausfällt oder dergleichen. Weiterhin können auch spezielle Entnahmewerkzeuge vorgesehen sein, mittels denen der Lichtdurchtrittskörper aus der Gussform entnommen werden kann. Zu diesem Zweck können beispielsweise ein oder mehrere an einem Roboterarm befestigte Verbindungselemente und/oder dergleichen vorgesehen sein.

Gemäß einer Weiterbildung wird vorgeschlagen, dass eine Mehrzahl von Gussformen in eine Förderrichtung zumindest teilweise hintereinander angeordnet ist. Dies erlaubt es, auf einfache Weise einen nahezu kontinuierlichen Prozess für die Herstellung der Lichtdurchtrittskörper zu ermöglichen. Vorzugsweise sind die Gussformen in Förderrichtung unmittelbar benachbart zueinander und/oder in Förderrichtung hintereinander angeordnet, sodass eine Reihe von Gussformen in Förderrichtung gebildet wird. Darüber hinaus kann natürlich auch vorgesehen sein, dass zwei oder mehrere Reihen von Gussformen gebildet werden, die vorzugsweise in Förderrichtung nebeneinander angeordnet sind. Dadurch kann eine Kapazität bei der Herstellung der Lichtdurchtrittskörper weiter erhöht werden. Vorzugsweise werden die Gussformen in die Förderrichtung gefördert.

Eine weitere Ausgestaltung sieht vor, dass die Gussform an einem umlaufenden Förderband angeordnet ist und das Entformen an einer Umlenkstelle des Förderbands erfolgt. Diese Ausgestaltung hat den Vorteil, dass auf einfache Weise ein Entformen realisiert werden kann, wobei separate Entformwerkzeuge weitgehend eingespart werden können. Aufgrund der Krümmung des Förderbands an der Umlenkstelle wird auch die Gussform entsprechend gekrümmt, sodass vorzugsweise eine Freigabe des Lichtdurchtrittskörpers erfolgt, sodass dieser, beispielsweise aufgrund einer Schwerkraftwirkung, aus der Form herausfallen kann. Diese Ausgestaltung eignet sich insbesondere für die Fertigung großer Stückzahlen.

Dabei kann natürlich vorgesehen sein, dass bei einer Mehrzahl von Gussformen im Wesentlichen gleiche Gussformen bereitgestellt werden. Darüber hinaus kann jedoch auch vorgesehen sein, dass mittels des Förderbands unterschiedliche Gussformen bereitgestellt werden, sodass mittels des auf diese Weise bereitgestellten Förderbands unterschiedliche Lichtdurchtrittskörper hergestellt werden können. Beispielsweise kann vorgesehen sein, dass in einem ersten Abschnitt des Förderbands für Lichtdurchtrittskörper einer ersten Ausführungsform ausgebildet ist, wohingegen in einem zweiten Abschnitt Lichtdurchtrittskörper gemäß einer zweiten Ausführungsform hergestellt werden können. Je nach Bedarf können die entsprechenden Gussformen bei einem umlaufenden Förderband mit dem flüssigen, aushärtbaren Silikonharz befüllt werden, um die gewünschten Lichtdurchtrittskörper herstellen zu können. Auf diese Weise kann auch bei einer Herstellung großer Stückzahlen kurzfristig zwischen unterschiedlichen Ausgestaltungen von Lichtdurchtrittskörpern umgeschaltet werden, indem lediglich die entsprechenden Gussformen mit dem flüssigen, aushärtbaren Silikonharz beaufschlagt werden.

Vorzugsweise ist zum Ausbilden der Gussform ein Bandmaterial auf einem Trägerband des Förderbands angeordnet, wobei das Bandmaterial zum Ausbilden der Gussform wenigstens eine in geeigneter Weise ausgebildete Durchgangsöffnung aufweist. Auf diese Weise kann das die Gussform aufweisende Förderband auf einfache Weise realisiert werden. Das Trägermaterial stellt auf diese Weise eine Bodenfläche für die Gussform bereit. Eine seitliche Begrenzungswand der Gussform kann durch das die Durchgangsöffnung aufweisende Bandmaterial bereitgestellt werden. Zu diesem Zweck ist das Bandmaterial mit dem Trägerband derart verbunden, dass es für das flüssige, aushärtbare Silikonharzweitgehend undurchlässig ist, sodass das flüssige, aushärtbare Silikonharznach dem Einbringen in die Gussform weitgehend in dieser verbleibt. Dabei erweist sich diese Ausgestaltung dahingehend als vorteilhaft, als dass auf einfache Weise unterschiedlichste Formen für Lichtdurchtrittskörper realisiert werden können, indem lediglich ein geeignetes Bandmaterial mit dem Trägerband verbunden wird. Das Bandmaterial kann auf unterschiedlichste Weise zum Bereitstellen der Gussformen vorbereitet werden, beispielsweise mittels Stanzen, Schneiden und/oder dergleichen. Dadurch kann mittels einfacher bekannter Herstellungsmethoden das Bandmaterial in geeigneter Weise bereitgestellt werden, sodass es durch Verbinden mit dem Trägerband die gewünschte Gussform, vorzugsweise eine Mehrzahl von entsprechenden Gussformen, bereitzustellen vermag.

Vorzugsweise ist vorgesehen, dass zum Aushärten eine Temperaturbehandlung des in der Gussform angeordneten flüssigen, aushärtbaren Silikonharzes erfolgt. Die Temperaturbehandlung kann beispielsweise in einem Ofen erfolgen. Sie kann darüber hinaus aber auch mittels einer Infrarotstrahlung oder dergleichen erfolgen. Vorzugsweise wird das flüssige, aushärtbare Silikonharz einer Temperatur in einem Bereich von etwa 100°C bis etwa 200°C ausgesetzt. Insbesondere wird deshalb die Gussform beziehungsweise die Mehrzahl von Gussformen zum Aushärten durch den Ofen geführt. Besonders vorteilhaft eignet sich diese Ausgestaltung in der Kombination mit dem Förderband, weil sich auf diese Weise ein nahezu kontinuierlicher Fertigungsprozess für die Lichtdurchtrittskörper erreichen lässt.

Gemäß einer weiteren Ausgestaltung wird vorgeschlagen, dass die vorgegebene Menge des flüssigen, aushärtbaren Silikonharzes in wenigstens zwei zeitlich voneinander getrennten Schritten zugeführt wird. Auf diese Weise kann erreicht werden, dass eine Schichtbildung des in der Gussform vorhandenen flüssigen, aushärtbaren Silikonharzes realisiert werden kann. Dies kann zur Erreichung von unterschiedlichen gewünschten Eigenschaften des Lichtdurchtrittskörpers genutzt werden. Diese Ausgestaltung eignet sich insbesondere für die Ausbildung von Silikonplatten, die parallel zu ihren großen Oberflächen ausgebildete benachbarte Schichten aufweisen sollen, die vorzugsweise parallel hierzu ausgebildet sind.

Vorzugsweise kann in diesem Zusammenhang vorgesehen sein, dass wenigstens zwei in ihrer Zusammensetzung unterschiedliche flüssige, aushärtbare Silikonharze, insbesondere gemeinsam, in die Gussform eingebracht werden. Dies ermöglicht es, eine Schichtbildung mit unterschiedlichen Eigenschaften, insbesondere hinsichtlich der Lichtdurchführung, erreichen zu können. Beispielsweise können die Schichten unterschiedliche Eigenschaften hinsichtlich einer Farbbeeinflussung, einer diffusiven Wirkung und/oder dergleichen aufweisen. Die flüssigen, aushärtbaren Silikonharze können sich diesbezüglich zum Beispiel dadurch unterscheiden, dass in ihnen unterschiedliche Arten von Partikeln enthalten sind, um eine gewünschte Wirkung der jeweiligen Schicht hinsichtlich ihrer optischen Eigenschaften erreichen zu können. Vorzugsweise werden die flüssigen, aushärtbaren Silikonharze nacheinander in die Gussform eingebracht.

Besonders vorteilhaft erweist es sich, wenn nach jedem Schritt des Einbringens ein Aushärten des jeweils in der Gussform vorhandenen flüssigen, aushärtbaren Silikonharzes in der Gussform erfolgt. Dadurch ist es möglich, genau definierte Schichten zu erzeugen. Insbesondere kann dadurch auch eine Schichtstruktur bereitgestellt werden, die eine vorgegebene Eigenschaft bereitzustellen vermag. Zu diesem Zweck kann vorgesehen sein, dass die Gussform abwechselnd einem jeweiligen Ausgeber und einem jeweiligen Ofen zugeführt wird. Besonders vorteilhaft lässt sich diese Ausgestaltung bei Nutzung eines Förderbandes einsetzen, bei dem entsprechend der vorgesehenen Ausgeber jeweilige Öfen nachgeordnet sind, sodass ein Aushärten des durch einen jeweiligen Ausgeber eingebrachten flüssigen, aushärtbaren Silikonharzes erfolgt, bevor mittels eines nachfolgenden Ausgebers erneut flüssiges, aushärtbares Silikonharz in die Gussform eingebracht wird. Dieses Verfahren eignet sich dann besonders für die Herstellung großer Stückzahlen bei geringen Kosten.

Gemäß einer weiteren vorteilhaften Ausgestaltung wird vorgeschlagen, dass das Bandmaterial lösbar mit dem Trägerband verbunden ist. Auf diese Weise kann eine hohe Flexibilität hinsichtlich der Fertigung erreicht werden. Dies ermöglicht es nicht nur, eine Fertigung auf einfache Weise hinsichtlich der herzustellenden Lichtdurchtrittskörper anzupassen, sondern es kann darüber hinaus auch eine einfache Wartung erreicht werden, beispielsweise wenn die durch das Förderband bereitgestellten Gussformen aufgrund des bestimmungsgemäßen Betriebs und einer Abnutzung eine vorgegebene Maßhaltigkeit der hergestellten Lichtdurchtrittskörper nicht mehr erlaubt. Durch einfaches Lösen des Bandmaterials und Austauschen durch ein neuwertiges Bandmaterial kann eine einfache und schnelle Wartung erreicht werden. Darüber hinaus eignet sich diese Ausgestaltung natürlich auch dazu, einen Fertigungsprozess von der Herstellung einer ersten Art von Lichtdurchtrittskörpern zur Herstellung einer zweiten Art von Lichtdurchtrittskörpern umzustellen. Es braucht also nicht das vollständige Förderband ausgetauscht zu werden, sondern es reicht aus, lediglich das Bandmaterial entsprechend auszutauschen.

Gemäß einer weiteren vorteilhaften Ausgestaltung wird vorgeschlagen, dass das Bandmaterial durch ein Silikon-Band gebildet ist. Durch Nutzen eines Silikon-Bandes können eine weitere Vereinfachung der Vorrichtung sowie auch eine Reduktion von etwaigen unerwünschten Wechselwirkungen des flüssigen, aushärtbaren Silikonharzes mit der Gussform erreicht werden. Die Zuverlässigkeit des Herstellprozesses kann dadurch weiter verbessert werden. Vorzugsweise unterscheidet sich jedoch das Silikon-Band hinsichtlich seiner Werkstoffzusammensetzung von der Zusammensetzung des flüssigen, aushärtbaren Silikonharzes, sodass vorzugsweise eine physikalische Grenzwirkung erreicht werden kann, die es erlaubt, den fertiggestellten Lichtdurchtrittskörper auf einfache Weise vom Silikon-Band zu trennen.

Besonders vorteilhaft wird in diesem Zusammenhang vorgeschlagen, dass das Silikon-Band zum Passivieren gegenüber dem flüssigen, aushärtbaren Silikonharz vorbehandelt ist. Das Vorbehandeln kann beispielsweise durch Fluoridieren und/oder auch durch Plasmabehandeln erfolgen. Dadurch kann ein Anhaften des Lichtdurchtrittskörpers nach dem Aushärten weitgehend vermieden werden. Zugleich kann die Abnutzung der Gussform entsprechend reduziert werden, sodass Wartung der Vorrichtung sowie auch Maßhaltigkeit der hergestellten Lichtdurchtrittskörper weiter verbessert werden kann.

Weiterhin wird vorgeschlagen, dass die Gussform eine Bodenfläche aufweist, an der wenigstens ein Strukturelement ausgebildet ist. Das Strukturelement kann durch eine Erhöhung, eine Vertiefung oder auch eine Mehrzahl hiervon sowie Kombinationen hiervon gebildet sein. Insbesondere kann das Strukturelement durch eine vorgegebene Rauigkeit, Welligkeit und/oder dergleichen gebildet sein. Das Strukturelement kann zumindest teilweise über die Bodenfläche erstreckt ausgebildet sein. Es kann auch vorgesehen sein, dass das Strukturelement lediglich an ausgewählten Bereichen beziehungsweise Stellen der Bodenfläche ausgebildet ist. Natürlich kann bei einer Mehrzahl von Gussformen auch vorgesehen sein, dass die Gussformen unterschiedliche Strukturelemente aufweisen, um entsprechend unterschiedlich ausgebildete Lichtdurchtrittskörper herstellen zu können. Auf diese Weise lassen sich darüber hinaus unterschiedliche vorgegebene optische Eigenschaften der Lichtdurchtrittskörper erreichen.

Weitere Vorteile und Merkmale ergeben sich aus der folgenden Beschreibung von Ausführungsbeispielen anhand der beigefügten Figuren. In den Figuren bezeichnen gleiche Bezugszeichen gleiche Merkmale und Funktionen.

### Es zeigen:

- Fig. 1: in einer schematischen Seitenansicht eine Vorrichtung zum Herstellen einer zumindest teilweise transparenten Silikonplatte als Lichtdurchtrittskörper,
- Fig. 2: eine schematische Draufsicht auf ein Bandmaterial für ein Förderband der Vorrichtung gemäß Fig. 1,
- Fig. 3: in einer schematischen Schnittansicht das Förderband für die Vorrichtung gemäß Fig. 1,
- Fig. 4 bis 6: unterschiedliche Ausgestaltungen von Silikonplatten, hergestellt mit der Vorrichtung gemäß Fig. 1,
- Fig. 7: eine weitere Ausgestaltung für eine Silikonplatte mit unterschiedlich gestalteten großen Oberflächen in einer ersten perspektivischen Darstellung, die eine der beiden großen Oberflächen zeigt,
- Fig. 8: eine schematische Darstellung wie Fig. 7, wobei jetzt jedoch die gegenüberliegende große Oberfläche gezeigt ist, und
- Fig. 9 bis 11: schematische perspektivische Darstellungen weiterer Ausgestaltungen von Silikonplatten, hergestellt mit der Vorrichtung gemäß Fig. 1, die unterschiedliche Schichtanordnungen aufweisen.

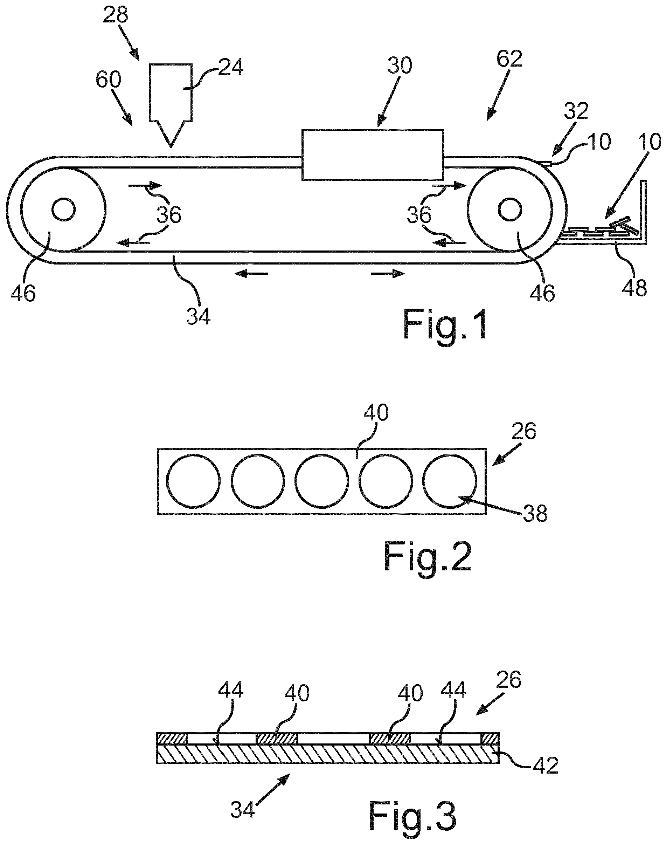

Fig. 1 zeigt in einer schematischen Seitenansicht eine Vorrichtung zum Herstellen von Silikonplatten 10 als Lichtdurchtrittskörper, die für die Anwendung bei einer Leuchte bestimmt sind. Die Silikonplatten 10 sind vorliegend als kreisförmige Scheiben ausgebildet.

Die Vorrichtung umfasst eine Ausgabeeinheit 28 für flüssiges, aushärtbares Silikonharz, zu welchem Zweck die Ausgabeeinheit 28 einen Ausgeber 24 zum Einbringen einer vorgegebenen Menge des flüssigen, aushärtbaren Silikonharzes in eine Gussform 26 aufweist.

Die Gussform 26 ist vorliegend an einem umlaufenden Förderband 34 ausgebildet, welches eine Mehrzahl von entsprechenden Gussformen 26 in eine Förderrichtung 36 hintereinander angeordnet aufweist. Das Förderband 34 ist vorliegend über Umlenkrollen 46 geführt, um einen entsprechenden Transport der Gussformen 26 zu gewährleisten. Zu diesem Zweck ist wenigstens eine der Umlenkrollen 46 entsprechend angetrieben, sodass eine Förderwirkung in vorgegebener Weise erreicht werden kann.

In einem ersten Bereich 60 ist der Ausgeber 24 angeordnet, der die Gussformen 26 mit einer vorgegebenen Menge des flüssigen, aushärtbaren Silikonharzes füllt. Aufgrund der Förderbewegung des Förderbandes 34 in Förderrichtung 36 werden die Gussformen 26 des Förderbandes 34 nacheinander an dem Ausgeber 24 vorbeigeführt und durch den Ausgeber 24 mit dem flüssigen, aushärtbaren Silikonharz gefüllt.

An den ersten Bereich 60 schließt sich ein zweiter Bereich 62 an, in dem das Förderband 34 durch einen Durchlaufofen 30 geführt wird. Der Ofen 30 ist vorliegend mit einer Infrarot-Heizung versehen, sodass ein vorgegebenes Temperaturprofil beim Durchlaufen des Förderbandes 34 durch den Ofen 30 erreicht werden kann. Durch die Temperaturwirkung des Ofens 30 härtet das in den Gussformen 26 angeordnete flüssige, aushärtbare Silikonharz aus, sodass die Silikonplatten 10 gebildet werden.

An den zweiten Bereich 62 schließt sich ein nicht bezeichneter Umlenkbereich an, bei dem das Förderband 34 um eine der Umlenkrollen 46 umgelenkt und wieder zur anderen der Umlenkrollen 46 zurückgeführt wird. Aufgrund der Umlenkung wird in diesem Bereich eine Entformeinheit 32 gebildet, in der die Silikonplatten 10 aus den Gussformen 26 entformt werden. Zu diesem Zweck ist ein Auffanggefäß 48 im Bereich der Entformeinheit 32 angeordnet, welches die aus den Gussformen 26 herausfallenden Silikonplatten 10 auffängt.

Die Vorrichtung eignet sich deshalb besonders gut für eine Massenherstellung. So kann ferner eine Mehrfachnutzenfertigung realisiert werden, indem Gussformen 26 zusätzlich auch quer zur Förderrichtung 36 am Förderband 34 vorgesehen werden.

Fig. 3 zeigt in einer schematischen Schnittansicht, dass zum Ausbilden der Gussformen 26 durch das Förderband 34 vorliegend vorgesehen ist, dass ein Bandmaterial 40 aus Silikon auf einem Trägerband 42 des Förderbandes 34 angeordnet ist, wobei das Bandmaterial 40 zum Ausbilden der Gussformen 26 entsprechend mit Durchgangsöffnungen 38 ausgebildet ist, die spätere Seitenwände der Gussformen 26 bilden. Die Durchgangsöffnungen 38 sind vorliegend durch Stanzen in dem Bandmaterial 40 ausgebildet. Dies ist in Fig. 2 in einer schematischen Draufsicht auf das Bandmaterial 40 dargestellt. Alternativ kann natürlich auch vorgesehen sein, dass die Durchgangsöffnungen 38 mittels Schneiden oder anderer Bearbeitungsverfahren hergestellt werden.

Darüber hinaus ist vorliegend auch das Trägerband 42 aus Silikon gebildet. Dadurch kann eine zuverlässige Funktion des Förderbandes 34 erreicht werden, zumal Wechselwirkungen zwischen dem Bandmaterial 40 und dem Trägerband 42 weitgehend reduziert beziehungsweise vermieden werden können.

Um die Funktion des Förderbandes 34 weiter zu verbessern, ist ferner vorgesehen, dass sowohl das Bandmaterial 40 als auch das Trägerband 42 zum Passivieren gegenüber dem flüssigen, aushärtbaren Silikonharz vorbehandelt sind. Dadurch kann erreicht werden, dass das flüssige, aushärtbare Silikonharz sowie auch die später hieraus gebildete Silikonplatte nicht an Rändern beziehungsweise Wänden der Gussformen 26 anhaften. Das Passivieren kann beispielsweise durch ein Fluoridieren oder auch durch eine Plasmabehandlung erfolgen.

Um eine vorgegebene Struktur einer an einer Bodenfläche 44 der Gussform 26 anliegenden Oberfläche der Silikonplatte 10 erreichen zu können, ist vorgesehen, dass die Bodenfläche 44 vorliegend ein Strukturelement aufweist. Das Strukturelement ist vorliegend durch eine vorgegebene Rauigkeit gebildet.

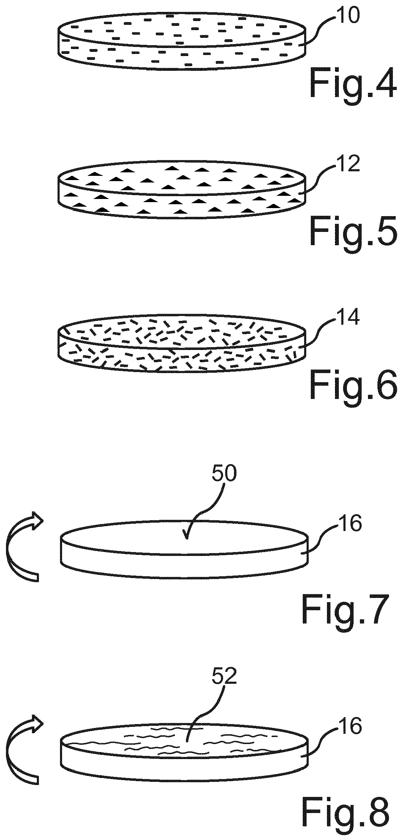

Eine hierdurch gebildete Silikonplatte 16 ist in den Fig. 7 und 8 schematisch in perspektivischer Darstellung gezeigt. Die dort dargestellte Silikonplatte 16 weist zwei in Bezug auf ihre Oberflächenstruktur voneinander unterschiedliche große Oberflächen 50, 52 auf, die im Wesentlichen vorliegend parallel zueinander angeordnet sind.

Die Darstellung gemäß Fig. 7 zeigt eine Oberseite als großer Oberfläche 50, die der Bodenfläche 44 in der Gussform 26 gegenüberliegt. Diese große Oberfläche 50 hat eine glatte Oberfläche. Dagegen ist die gegenüberliegende große Oberfläche 52, die eine Unterseite bildet, entsprechend der Rauigkeit der Bodenfläche 44 ausgestaltet. Dies ist in Fig. 8 dargestellt. Durch die Struktur der großen Oberfläche 52 können vorgegebene optische Eigenschaften erreicht werden.

Die Fig. 4 bis 6 zeigen unterschiedliche Ausgestaltungen für Silikonplatten 10, 12, 14, die mit der Vorrichtung gemäß Fig. 1 hergestellt werden.

Fig. 4 zeigt die Silikonplatte 10, die vorliegend einen Lichtdiffusor bildet, zu welchem Zweck diffusive Partikel im flüssigen, aushärtbaren Silikonharz während des Herstellprozesses vorhanden sind. Diese diffusiven Partikel sind innerhalb der Silikonplatte 10 verteilt angeordnet, sodass die gewünschte Diffusionswirkung mit der Silikonplatte 10 erreicht werden kann.

Fig. 5 zeigt eine weitere Ausgestaltung einer Silikonplatte 12, die hinsichtlich ihrer Abmessungen vorliegend der Silikonplatte 10 gemäß Fig. 4 entspricht. Im Unterschied zur Silikonplatte 10 sind in der Silikonplatte 12 vorliegend jedoch Phosphorpartikel vorgesehen. Diese Phosphorpartikel sind anstelle der diffusiven Partikel bei der Silikonplatte 10 im flüssigen, aushärtbaren Silikonharz vorgesehen. Dadurch kann eine Steuerung einer Lichtfarbe beziehungsweise Lichttemperatur erreicht werden. Das in die Silikonplatte 12 eintretende Licht regt den Phosphor der Phosphorpartikel an, sodass dieser eine entsprechende eigene Lichtemission bewirkt. Diese Lichtemission vermischt sich mit dem zugeführten Licht und ermöglicht dadurch ein Steuern der Lichtfarbe beziehungsweise Lichttemperatur. Je nach Bedarf kann die Anzahl der Partikel variiert werden, um den gewünschten Effekt beeinflussen zu können. Dies gilt im Übrigen auch für die Silikonplatte 10 gemäß Fig. 4.

Fig. 6 zeigt eine weitere Ausgestaltung für eine Silikonplatte 14, bei der anstelle der diffusiven Partikel beziehungsweise Phosphorpartikel der vorgehenden beiden Ausgestaltungen der Silikonplatten 10, 12 Farbpigmentpartikel vorgesehen sind. Durch die Farbpigmentpartikel kann eine Farbe der Silikonplatte 14 eingestellt werden.

Eine Intensität einer jeweiligen Wirkung der Partikel kann zum Beispiel durch eine Dichte der Partikel im flüssigen, aushärtbaren Silikonharz eingestellt werden.

Natürlich können die vorgenannten Ausgestaltungen auch in nahezu beliebiger Weise miteinander kombiniert werden, um weitere Ausgestaltungen von Silikonplatten erreichen zu können. Insbesondere ist anzumerken, dass die Silikonplatten, die vorliegend als im Wesentlichen kreisförmige Scheiben ausgebildet sind, auch andere geometrische Abmessungen aufweisen können, beispielsweise können sie zumindest teilweise auch oval sein, eckig, insbesondere rechteckig, dreieckig oder dergleichen sein oder es können auch Kombinationen hiervon vorgesehen sein. Sie können ferner als Quader, als Kegel, als Kegelstumpf, als Pyramide, als Zylinder und/oder dergleichen ausgebildet sein.

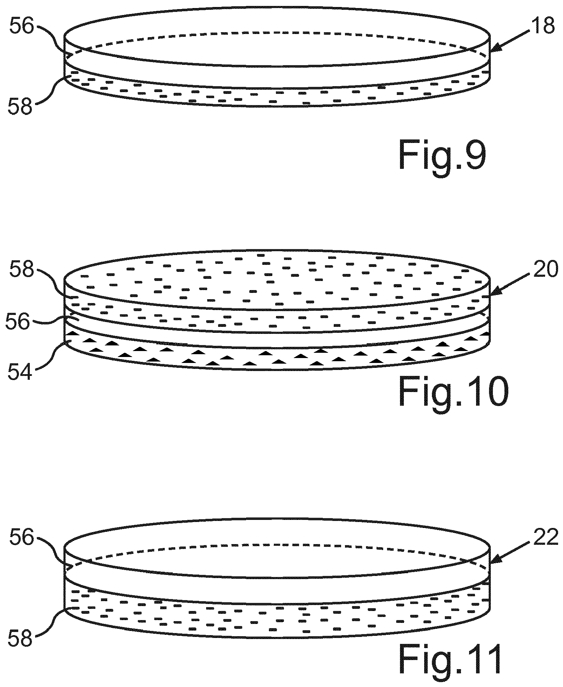

In den Fig. 9 bis 11 sind weitere Ausgestaltungen für Silikonplatten 18, 20, 22 dargestellt, die sich besonders vorteilhaft mit der Erfindung herstellen lassen. Gemeinsam ist diesen Ausgestaltungen, dass die Silikonplatten 18, 20, 22 geschichtet ausgebildet sind, wobei die Schichten vorliegend im Wesentlichen parallel zu deren jeweiligen großen Oberflächen ausgebildet sind.

In Fig. 9 ist eine zweischichtige Silikonplatte 18 gezeigt, wobei eine untere Schicht 58 diffus transparent ausgebildet ist, vergleichbar zu der Silikonplatte 10 gemäß Fig. 4. Eine obere Schicht 56 ist stattdessen rein transparent, insbesondere ohne diffusive Wirkung. Dadurch können besondere optische Eigenschaften erreicht werden. In dieser Ausgestaltung weisen die die Schichten 56, 58 etwa eine gleiche Dicke auf.

Fig. 10 zeigt eine weitere Ausgestaltung für eine Silikonplatte 20, die vorliegend dreischichtig ausgebildet ist. Hier ist eine untere Schicht 54 vorgesehen, die Phosphorpartikel enthält, vergleichbar mit der Ausgestaltung der Silikonplatte 12 gemäß Fig. 5. Darüber sind eine transparente Schicht 56 und darauf eine diffus transparente Schicht 58 wie bei der Silikonplatte 18 gemäß Fig. 9 ausgebildet. Die Silikonplatte 20 ist vorliegend also dreischichtig ausgebildet.

Fig. 11 zeigt eine weitere Ausgestaltung einer Silikonplatte 22, die ebenfalls wie die Silikonplatte 18 gemäß Fig. 9 zweischichtig ausgebildet ist. Im Unterschied zur Silikonplatte 18 ist die Silikonplatte 20 hier jedoch mit unterschiedlich dicken Schichten ausgebildet. So ist die diffus transparente Schicht 58 etwa doppelt so dick wie die rein transparente Schicht 56. Auch hierdurch lassen sich wieder besondere optische Effekte erreichen.

Auch wenn vorliegend die Schichten parallel zu den großen Oberflächen ausgebildet sind, kann hier natürlich auch eine Abweichung vorgesehen sein, beispielsweise indem die Gussform 26 während des Aushärtens in einer Schrägstellung gehalten wird, eine vorgegebene Bewegung ausführt und/oder dergleichen.

Mit der Erfindung kann insgesamt eine Reihe von Vorteilen gegenüber dem Stand der Technik erreicht werden. Die Erfindung erlaubt es nämlich, das flüssige, aushärtbare Silikonharz nahezu vollständig im Fertigungsprozess nutzen zu können. Dies ergibt sich aufgrund des Gießprozesses.

Darüber hinaus kann eine gut steuerbare optische Eigenschaft der mit der Erfindung hergestellten Silikonplatten erreicht werden, weil eine hohe Genauigkeit der Konzentration und Verteilung von optisch wirksamen Partikeln im flüssigen, aushärtbaren Silikonharz realisiert werden kann.

Für die Erfindung braucht lediglich reines transparentes Silikon vorgesehen zu werden sowie gegebenenfalls erforderliche Additive für die beabsichtigte optische Funktion. Weitere Zusatzstoffe wie Additive und/oder dergleichen zum Unterstützen des Herstellprozesses, insbesondere auch in Bezug auf das Aushärten, sind nicht erforderlich, sodass negative Auswirkungen durch solche Zusatzstoffe beziehungsweise Additive auf die optischen Eigenschaften der hergestellten Lichtdurchtrittskörper weitgehend vermieden werden können.

Darüber hinaus erlaubt es die Erfindung, aufgrund des Gießprozesses eine flexible Produktion sowie eine einfache Anpassbarkeit an optische Funktionen zu erreichen.

Insbesondere ermöglicht es die Erfindung, Lichtdurchtrittskörper herzustellen, die an beiden Oberflächen eine glatte Oberfläche bereitstellen oder eine strukturierte Oberfläche an einer der Oberflächen. Dieses Merkmal lässt sich im Übrigen auch dazu nutzen festzustellen, ob der Lichtdurchtrittskörper mit dem erfindungsgemäßen Verfahren hergestellt wurde.

Die Erfindung erlaubt es ferner, mit großer Zuverlässigkeit immer gleiche Oberflächen der Lichtdurchtrittskörper bereitzustellen, und zwar aufgrund des Gießprozesses.

Natürlich ist die Erfindung nicht auf runde Formen beschränkt, sondern es können auch nahezu beliebige andere Formen realisiert werden, wie oben bereits diskutiert. Auch großflächige Lichtdurchtrittskörper können auf diese Weise realisiert werden. So kann beispielsweise vorgesehen sein, dass eine Form des Lichtdurchtrittskörpers an eine geeignete mechanische Befestigung der Leuchte beziehungsweise eines Leuchtengehäuses angepasst ausgebildet werden kann.

Die Erfindung ist sowohl für kleine Stückzahlen als auch für große Stückzahlen, insbesondere für eine Massenproduktion, gut geeignet. Es ist nicht zwingend erforderlich, große Stückzahlen herzustellen, um das Verfahren kosteneffektiv durchführen zu können.

Es lassen sich mit der Erfindung auf einfache Weise auch unterschiedlichste Lichtdurchtrittskörper herstellen, wie oben erläutert. Dabei ist eine hohe Flexibilität bei geringen Kosten möglich.

Die Erfindung erlaubt es darüber hinaus, auch nahezu eine individuelle Einstellung der Lichtdurchtrittskörper zu ermöglichen. Dadurch können zum Beispiel Lichtdurchtrittskörper, insbesondere Silikonplatten, für unterschiedliche Leuchtmittel angepasst bereitgestellt werden, beispielsweise unterschiedliche Leuchtdioden oder dergleichen.

Gegenüber einem Spritzgussverfahren erweist sich die erfindungsgemäße Herstellung als deutlich kostengünstiger, insbesondere, weil keine kostenintensiven Formen erforderlich sind und eine kurze Rüstzeit erreicht werden kann.

Die Ausführungsbeispiele dienen lediglich der Erläuterung der Erfindung und sind für diese nicht beschränkend. Natürlich können einzelne Ausgestaltungen auch in nahezu beliebiger Weise miteinander kombiniert werden, um zu weiteren Ausgestaltungen im Rahmen der Erfindung gelangen zu können.

Ferner ist anzumerken, dass die für die erfindungsgemäße Verfahrensführung angegebenen Verfahrensmerkmale auch durch entsprechend wirkende Vorrichtungsmerkmale angegeben sein können und umgekehrt. Entsprechend können für Verfahrensmerkmale auch Vorrichtungsmerkmale oder umgekehrt angegeben sein.

Schließlich ist anzumerken, dass die für die erfindungsgemäße Verfahrensführung angegebenen Vorteile und Wirkungen natürlich gleichermaßen auch für die erfindungsgemäße Vorrichtung sowie den Lichtdurchtrittskörper gelten und umgekehrt.

### BEZUGSZEICHENLISTE

- 10: Silikonplatte
- 12: Silikonplatte
- 14: Silikonplatte
- 16: Silikonplatte
- 18: Silikonplatte
- 20: Silikonplatte
- 22: Silikonplatte
- 24: Ausgeber
- 26: Gussform
- 28: Ausgabeeinheit
- 30: Durchlaufofen
- 32: Entformeinheit
- 34: Förderband
- 36: Förderrichtung
- 38: Durchgangsöffnungen
- 40: Bandmaterial
- 42: Trägerband
- 44: Bodenfläche
- 46: Umlenkrolle
- 48: Auffanggefäß
- 50: Oberfläche
- 52: Oberfläche
- 54: Schicht
- 56: Schicht
- 58: Schicht
- 60: erster Bereich
- 62: zweiter Bereich

## Patentansprüche

1. Verfahren zum Herstellen eines Lichtdurchtrittskörpers (10, 12, 14, 16, 18, 20, 22) für eine Leuchte, **gekennzeichnet durch** die Schritte:
- Bereitstellen von flüssigem, aushärtbarem Silikonharz,
- Bereitstellen wenigstens einer Gussform (26),
- Einbringen einer vorgegebenen Menge des flüssigen, aushärtbaren Silikonharzes in die Gussform (26),
- Aushärten des flüssigen, aushärtbaren Silikonharzes in der Gussform (26), wodurch der Lichtdurchtrittskörper (10, 12, 14, 16, 18, 20, 22) ausgebildet wird, und
- Entformen des Lichtdurchtrittskörpers (10, 12, 14, 16, 18, 20, 22) aus der Gussform (26).

2. Verfahren nach Anspruch 1, **dadurch gekennzeichnet, dass** eine Mehrzahl von Gussformen (26) in eine Förderrichtung (36) zumindest teilweise hintereinander angeordnet und in die Förderrichtung (36)gefördert wird.

3. Verfahren nach Anspruch 1 oder 2, **dadurch gekennzeichnet, dass** die Gussform (26) an einem umlaufenden Förderband (34) angeordnet ist und das Entformen an einer Umlenkstelle (32) des Förderbands (34) erfolgt.

4. Verfahren nach einem der vorhergehenden Ansprüche, **dadurch gekennzeichnet, dass** zum Aushärten eine Temperaturbehandlung des in der Gussform (26) angeordneten flüssigen, aushärtbaren Silikonharzes erfolgt.

5. Verfahren nach Anspruch 4, **dadurch gekennzeichnet, dass** die Gussform (26) zum Aushärten durch einen Ofen (30) geführt wird.

6. Verfahren nach einem der vorhergehenden Ansprüche, **dadurch gekennzeichnet, dass** die vorgegebene Menge des flüssigen, aushärtbaren Silikonharzes in wenigstens zwei zeitlich voneinander getrennten Schritten eingebracht wird.

7. Verfahren nach Anspruch 6, **dadurch gekennzeichnet, dass** wenigstens zwei in ihrer Zusammensetzung unterschiedliche flüssige, aushärtbare Silikonharze gemeinsam in die Gussform eingebracht werden.

8. Verfahren nach Anspruch 7, **dadurch gekennzeichnet, dass** nach jedem Schritt des Einbringens ein Aushärten des jeweils in der Gussform (26) vorhandenen flüssigen, aushärtbaren Silikonharzes erfolgt.

9. Vorrichtung zum Herstellen eines Lichtdurchtrittskörpers (10, 12, 14, 16, 18, 20, 22) für eine Leuchte, **gekennzeichnet durch**:
- wenigstens eine Gussform (26),
- wenigstens einen Ausgeber (24) zum Einbringen einer vorgegebenen Menge von flüssigem, aushärtbarem Silikonharz in die Gussform (26),
- eine Aushärteeinheit (30) zum Aushärten des flüssigen, aushärtbaren Silikonharzes in der Gussform (26), um den Lichtdurchtrittskörper (10, 12, 14, 16, 18, 20, 22) auszubilden, und
- eine Entformeinheit (32) zum Entformen des Lichtdurchtrittskörpers (10, 12, 14, 16, 18, 20, 22) aus der Gussform (26).

10. Vorrichtung nach Anspruch 9, **dadurch gekennzeichnet, dass** eine Mehrzahl von Gussformen (26) an einem umlaufenden Förderband (34) in eine Förderrichtung (36) zumindest teilweise hintereinander angeordnet sind, wobei vorzugsweise zum Ausbilden der Gussform (26) ein Bandmaterial (40) auf einem Trägerband (42) des Förderbands (34) angeordnet ist, wobei das Bandmaterial (40) zum Ausbilden der Gussform (26) wenigstens eine in geeigneter Weise ausgebildete Durchgangsöffnung (38) aufweist.

11. Vorrichtung nach Anspruch 10, **dadurch gekennzeichnet, dass** das Bandmaterial (40) lösbar mit dem Trägerband (42) verbunden ist.

12. Vorrichtung nach Anspruch 10 oder 11, **dadurch gekennzeichnet, dass** das Bandmaterial durch ein Silikon-Band gebildet ist.

13. Vorrichtung nach Anspruch 12, **dadurch gekennzeichnet, dass** das Silikon-Bandmaterial (40) zum Passivieren gegenüber dem flüssigen, aushärtbaren Silikonharz vorbehandelt ist.

14. Vorrichtung nach einem der Ansprüche 9 bis 13, **dadurch gekennzeichnet, dass** die Gussform (26) eine Bodenfläche (44) aufweist, an der wenigstens ein Strukturelement ausgebildet ist.

15. Lichtdurchtrittskörper (10, 12, 14, 16, 18, 20, 22) für eine Leuchte, mit einer Lichteintrittsfläche und einer Lichtaustrittsfläche, die an wenigstens einer Oberfläche (50, 52) des Lichtdurchtrittskörpers (10, 12, 14, 16, 18, 20, 22) ausgebildet sind,
**dadurch gekennzeichnet, dass**
der Lichtdurchtrittskörper (10, 12, 14, 16, 18, 20, 22) ausschließlich aus einem aushärtbaren Silikonharz gebildet ist, das höchstens einen oder mehrere Zusatzstoffe ausschließlich zum Einstellen einer vorgegebenen optischen Eigenschaft des Lichtdurchtrittskörpers (10, 12, 14, 16, 18, 20, 22) enthält.
